# EUROPÄISCHE PATENTSCHRIFT

(11) **EP 0 620 903 B1**
(45) Veröffentlichungstag und Bekanntmachung des Hinweises auf die Patenterteilung: **24.04.1996**
(21) Anmeldenummer: 93902181.2
(22) Anmeldetag: 12.01.1993
(51) Int. Cl.: F16H 1/14, F16H 57/02

(54) **ZAHNRADGETRIEBE**
TOOTHED GEAR
TRANSMISSION PAR ENGRENAGES

(30) Priorität: 13.01.1992 CH 84/92
(43) Veröffentlichungstag der Anmeldung: 26.10.1994
(73) Patentinhaber: Cedis Licensing GmbH, A-5020 Salzburg (AT)
(72) Erfinder: LOHAUSEN, Viktor, D-7101 Oberheinriet (DE)
(74) Vertreter: Rosenich, Paul, Dipl.-Ing.
(86) Internationale Anmeldenummer: EP9300056
(87) Internationale Veröffentlichungsnummer: WO9314331

(56) Entgegenhaltungen:
- DE-A- 2 110 012
- DE-A- 3 806 504
- GB-A- 1 593 570
- US-A- 4 034 621

## Beschreibung

Die Erfindung betrifft ein Zahnradgetriebe gemäss dem Oberbegriff des Patentanspruchs 1.

Solche Getriebe werden häufig bei Antrieben einer Kippvorrichtung in Gelenkarmmarkisen eingesetzt.

Bekanntlich sind solche Kippvorrichtungen für Gelenkarmmarkisen hohen Beanspruchungen durch Wind und Wetter, Regen und Sonnenschein, Schnee und Eis ausgesetzt. Diese Beanspruchungen wirken sich dabei auf den eigentlichen Antrieb als ungewöhnlich hohe Zug- oder Druckkräfte aus. Derartige Antriebe, die normalerweise als Kegelradgetriebe, insbesondere Kegelzahnradgetriebe ausgeführt sind, sollen einerseits stabil, andererseits aber möglichst raumsparend aufgebaut sein.

Eine raumsparende Anordnung für eine Kippvorrichtung für Gelenkarmmarkisen mit einer das Montagerohr durchsetzenden Antriebswelle und einer in einer offenen Wanne gelagerten Stellvorrichtung für eine Stellspindel zeigt beispielsweise die DE 38 06 504 A 1 des Anmelders.

Hier tritt jedoch das Problem auf, dass die aus der Verstellspindel auf den Verstellmechanismus selbst einwirkenden starken Zug- oder Druckkräfte normalerweise nicht so leicht abgefangen werden und zu Störungen z.B. durch übergrosse Biegemomente und Verklemmen der Kegelzahnräder führen können. Ausserdem werden hierbei die an der Stellspindel auftretenden Zug- oder Druckkräfte auch auf die Lager einwirken und die Lagerreibung erhöhen.

Bei einem anderen Getriebe, gemäss der DE-A-2110012 und dem Oberbegriff des Anspruchs 1, wie es wohl im Kraftfahrzeugbau verwendet wird, werden Lagerreibungen infolge starker Drücke oder Züge durch eine Abstützung von einer Welle auf der anderen verringert. Dabei werden jedoch eine Vielzahl von zusätzlichen Lagern wie Tellerlager, Nadellager und Kugellager verwendet, wodurch ein sehr aufwendiges Getriebe gegeben ist.

Aufgabe der Erfindung ist es demgegenüber, derartige Stellantriebe oder Verstellgetriebe grundlegend zu vereinfachen und Bauteile zu reduzieren und sie gleichzeitig bei ebenso geringen Abmessungen so zu gestalten, dass der Verstellmechanismus bei übergrossen, von Verstellspindel ausgehenden Zug- oder Druckkräften nicht mehr blockiert wer den kann.

Dies wird erfindungsgemäss mit den Merkmalen des Patentanspruchs 1 erreicht.

Weitere Ausgestaltungen der Erfindung sind den Unteransprüchen zu entnehmen.

Die Erfindung wird nunmehr anhand eines Ausführungsbeispieles in Verbindung mit den beigefügten Figuren näher erläutert.

Dabei zeigen:
- Fig. 1: eine Draufsicht, teilweise im Schnitt, des neuen Getriebes;
- Fig. 2: eine Ansicht von rückwärts und
- Fig. 3: eine Seitenansicht.

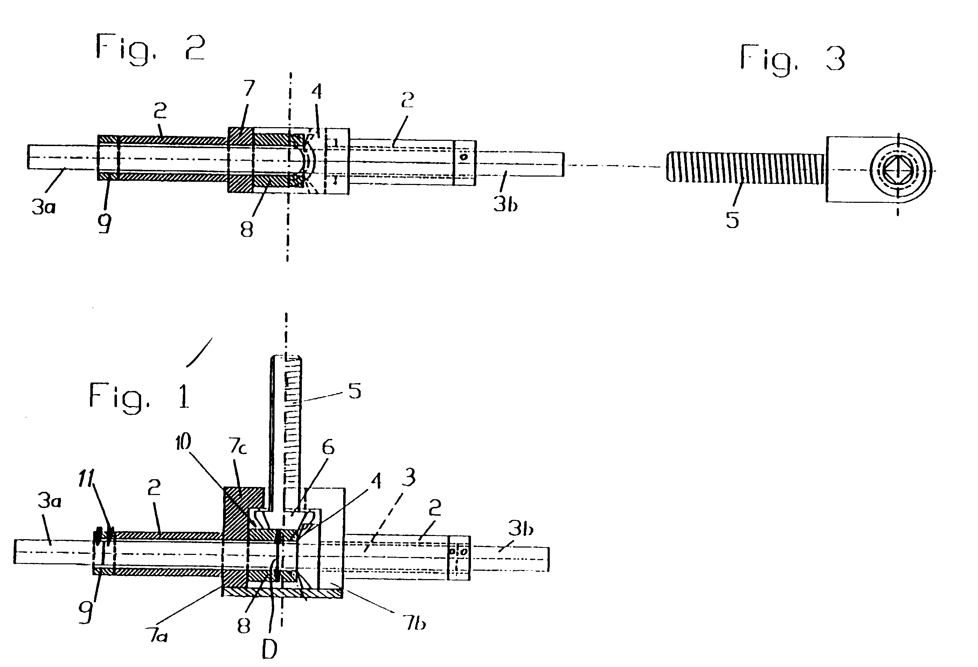

In Fig. 1 ist ein Kegelzahnradgetriebe gezeigt, das in einem Montagerohr 2 angeordnet ist. Eine Antriebswelle 3 durchsetzt diese Montagerohr, vorzugsweise nach beiden Seiten. Diese Antriebswelle kann entweder einteilig oder zweiteilig sein.

Auf dieser Antriebswelle 3 ist ein Kegelzahnrad 4 angeordnet. Dieses Kegelzahnrad kämmt mit einem weiteren Kegelzahnrad 6, das dazu orthogonal angeordnet und mit einer Abtriebswelle 5 als Stellspindel für eine Kippvorrichtung verbunden ist.

Der Lagerbock 7 bildet einerseits das Lager für die Antriebsspindel 3, zum anderen die Lagerung für die Abtriebswelle 5.

Dieses Kegelzahnradgetriebe könnte übergrosse Zug- oder Druckspannungen, die von der Verstellspindel oder Abtriebswelle 5 übertragen werden, so nicht aufnehmen, d.h. der U-förmige Lagerbock könnte sich verbiegen. Daher ist auf der Antriebswelle zwischen dem Kegelzahnrad 4, dem treibenden Zahnrad und dem Lagerbock 7 ein Abschnitt mit grösserem Durchmesser vorgesehen, der beispielsweise als eine die Antriebswelle 3 entweder einstückig sein oder aus zwei Teilen bestehen. In jedem Fall ist eine kraftschlüssige Verbindung des treibenden Kegelzahnrades 4 mit der Antriebswelle 3 erforderlich.

Für den Fall, dass die Antriebswelle aus zwei Teilen hergestellt ist, ist es von Vorteil, wenn das treibende Kegelzahnrad 4 als Kupplung für die beiden Teile der Antriebswelle ausgebildet ist. Insbesondere könnte dabei dieses Kegelzahnrad einen Teil des Abschnittes mit vergrössertem Durchmesser bilden, an den sich dann eine entsprechende schmalere Hülse 8 anschliessen könnte.

Ferner ist es durchaus im Rahmen der Erfindung vorteilhaft, wenn das antreibende Kegelzahnrad 4 und die Hülse 8 aus einem Stück bestehen. Dabei besteht dann die Möglichkeit, dieses Teil als Kupplungsmuffe für eine aus zwei Teilen bestehende Antriebswelle 3 einzusetzen.

Andererseits könnte aber auch an dem Kegelzahnrad einschliesslich der Hülse eine Befestigungsvorrichtung, z.B. eine Madenschraube oder drgl. vorgesehen sein, mit der dieses Teil auf einer durchgehenden Antriebswelle 3 befestigbar ist.

Andererseits kann es auch von Vorteil sein, das Kegelzahnrad 4 mit einem als Kupplungsabschnitt dienenden Ansatz mit oder ohne den vergrösserten Durchmesser zu versehen. Dann wird man eine entsprechende kürzere Hülse 8 auf die Antriebswelle aufschieben. Wichtig ist dabei, dass der Zwischenraum zwischen Kegelzahnrad 4 und dem Lagerbock ausgefüllt ist.

Andererseits ist es auch möglich, dass das Kegelzahnrad 4 auf der Antriebswelle 3 derart befestigt ist, dass ein der Kupplung dienender Abschnitt in den Innenraum hineinragt, und dass die Hülse 8 als Kupplungsmuffe für die aus zwei Teilen bestehende Antriebswelle dient.

Schliesslich kann es günstig sein, wenn die Antriebswelle 3 im Bereich des Kegelzahnrades 4 einen quadratischen oder ähnlich unrunden Querschnitt und das Kegelzahnrad 4 eine entsprechende Bohrung aufweist, wodurch das antreibende Kegelzahnrad 4 kraft- und formschlüssig mit der Antriebswelle verbunden ist.

Selbstverständlich ist es dann auch günstig und zweckmässig, der gesamten aus einem Teil oder aus zwei Teilen bestehenden Antriebswelle 3 einen unrunden, z.B. quadratischen Querschnitt zu geben. Die Hülse 8 oder die Kupplungshülse würde dann eine entsprechende Bohrung besitzen.

Wichtig ist dabei, dass der gesamte Raum zwischen dem Kegelzahnrad 4 und dem Lagerbock 7 in achsialer Richtung der Antriebswelle 3 so weit ausgefüllt ist, dass sich die Antriebswelle noch leicht drehen lässt, jedoch einer durch Zug- oder Druckkräfte verursachten Verbiegung Widerstand zu leisten vermag. Damit wird ein Verklemmen der beiden Kegelzahnräder des Kegelzahnradgetriebes in jedem Fall vermieden.

Man sieht ausserdem, dass bei dieser Konstruktion die Bauhöhe sehr gering gehalten ist und nur in Richtung der Abtriebswelle 5, d.h. der Verstellspindel, der Lagerbock 7 vorspringt.

Die Figuren 2 und 3 zeigen entsprechende Ansichten und sind, soweit erforderlich, mit den gleichen Bezugszeichen versehen und bedürfen keiner weiteren Erläuterung.

Aus Fig. 3 erkennt man schliesslich, dass die Antriebswelle zumindest am äusseren Ende einen Vierkantquerschnitt aufweist.

Insgesamt ist durch die neue Konstruktion eines Kegelzahnradgetriebes für den Verstellmechanismus von Kippvorrichtungen in Gelenkarmmarkisen das bisher auftretende Problem eines Verkantens oder Verklemmens des Antriebes ausgeschaltet.

Die folgenden Bezugszeichen bezeichnen folgende Teile:
2. Montagerohr; 3. durchsetzende Welle oder Teile (3a,b);
4. treibendes Zahnrad; 5. abgestützte Welle; 6. Zahnrad;
7. Lagerbock (a,b Schenkel; c Verbindungsschenkel, d Deckel oder Joch); 8. Hülse; 9. Muffenring für die Verbindung der Welle;
10. Abstützabschnitt.

## Patentansprüche

1. Zahnradgetriebe mit einer, ein erstes Zahnrad (4) tragenden ein- oder mehrteilige erste Welle (3) und einer dazu im Winkel angeordneten, wenigstens ein zweites Zahnrad (6) tragenden ein- oder mehrteiligen zweiten Welle (5), welche Wellen (3,5) in einem Lagerbock (7) gelagert sind, wobei wenigstens die erste den Lagerbock (7) zweimal durchsetzt und einen Abstützabschnitt (10) aufweist, der die zweite Welle (5) abstützt, dadurch gekennzeichnet, dass der Abstützabschnitt (10) dabei unmittelbar die zweite, den Lagerbock (7) nur einmal durchsetzende Welle (5) abstützt und dabei selbst als axiales Drehlager für sie dient und gleichzeitig entlang der Achse der ersten Welle (3) so ausgebildet ist, dass er den Raum zwischen dem ersten Zahnrad (4) und dem Lagerbock (7) so weit ausfüllt, dass sich die erste Welle (3) noch leicht drehen lässt, jedoch einer durch Zug- oder Druckkräfte verursachte Verbiegung Widerstand zu leisten vermag.

2. Zahnradgetriebe nach Anspruch 1, dadurch gekennzeichnet, dass die zweimal durchsetzende Welle (3) einer Antriebswelle entspricht und die abgestützte zweite Welle (5) durch eine Abtriebswelle gebildet ist, wobei der Abstützabschnitt (10) zwischen dem treibenden Zahnrad (4) und dem Lager der Antriebswelle (3) im Lagerbock (7) angeordnet und gegebenenfalls einen - gemessen an der Antriebswelle (3) ausserhalb des Lagerbocks (7) - vergrösserten Durchmesser (D) aufweist.

3. Zahnradgetriebe nach Anspruch 1 oder 2, dadurch gekennzeichnet, dass der Abstützabschnitt (10) einerseits im Bereich eines Lagers für die durchsetzende Welle (3) am Lagerbock (7) und andererseits am durch die zweimal durchsetzende Welle (3) getragenen Zahnrad (4) abgestützt ist und gleichzeitig das durch die abgestützte zweite Welle (5) getragene Zahnrad (6) stützt.

4. Zahnradgetriebe nach einem der vorhergehenden Ansprüche, dadurch gekennzeichnet, dass der Lagerbock (7) U- förmig oder wannenförmig ausgebildet ist und mindestens zwei gegenüberliegende Schenkel (7a,b) aufweist, an denen die zweimal durchsetzende Welle (3) gelagert ist, wobei die abgestützte zweite Welle (5) am Verbindungsschenkel (7c) gelagert ist, und wobei gegebenenfalls ein form- und/oder kraftschlüssig befestigbarer Deckel (7d) oder Joch zum Verschluss des U's bzw. der Wanne vorgesehen ist.

5. Zahnradgetriebe nach einem der vorhergehenden Ansprüche, dadurch gekennzeichnet, dass die zweimal durchsetzende Welle (3) zumindest an einer Seite des Lagerbocks (7) in einem Montagerohr (2) drehbar gelagert ist, das mit dem Lagerbock (7) verbunden, z.B. verschraubt, eingeschraubt, verpresst, verschweisst oder einstückig ausgebildet ist.

6. Zahnradgetriebe nach einem der vorhergehenden Ansprüche, dadurch gekennzeichnet, dass der Abstützabschnitt (10) durch eine die zweimal durchsetzende Welle (3) umgebende, beidseitig abgestützte - gegebenenfalls drehbare und/oder zweigeteilte - Hülse bzw. Muffe (8) gebildet ist, wobei vorzugsweise zumindest die Mantelfläche der Hülse (8), gegebenenfalls auch die übrigen aneinander reibenden Teile gleitfähig - insbesondere mittels Teflon (eingetragene Marke der Firma DU PONT) - beschichtet sind.

7. Zahnradgetriebe nach einem der vorhergehenden Ansprüche, dadurch gekennzeichnet, dass die Antriebswelle (3) einstückig ist, und dass das treibende Zahnrad (4) auf dieser Welle lösbar axial festgelegt ist, wobei sie vorzugsweise seitlich der Montagerohre (2) zumindest einen, ebenso axial wirkenden, lösbar festlegbaren Muffenring (9) für die Verbindung der Welle (3) mit mindestens einer Wellenverlängerung (3a,b) aufweist.

8. Zahnradgetriebe nach einem der vorhergehenden Ansprüche, dadurch gekennzeichnet, dass das treibende Zahnrad (4) und/oder die Hülse (8) als eine oder je eine Kupplungsmuffe ausgebildet ist bzw. sind, und dass die Antriebswelle (3) aus mindestens zwei Teilen besteht, die durch mindestens eine der Kupplungsmuffen miteinander verbindbar sind.

9. Zahnradgetriebe nach einem der vorhergehenden Ansprüche, dadurch gekennzeichnet, dass das treibende Zahnrad (4) zusammen mit der Hülse (8) einstückig ausgebildet ist.

10. Zahnradgetriebe nach einem der vorhergehenden Ansprüche, dadurch gekennzeichnet, dass das treibende Zahnrad (4) derart auf der Antriebswelle (3) befestigt ist, dass ein konzentrischer Kupplungsabschnitt in den Innenraum des Lagerbocks (7) hineinragt und/oder dass die Hülse (8) als Kupplungsmuffe für die aus zwei Teilen bestehende Antriebswelle dient.

11. Zahnradgetriebe nach einem der vorhergehenden Ansprüche, dadurch gekennzeichnet, dass drei kämmende Zahnräder vorgesehen sind, die ein Differenzial bilden.

12. Verwendung eines Zahnradgetriebe nach einem der vorhergehenden Ansprüche für einen Öffnungsantrieb von Gelenkarmmarkisen, Fenstern, Türen, Klappen, Verstellmechanismen für Getriebe- oder Motorsteuerungen u.s.w.

## Claims

1. Toothed gear having a single item part or multi-part first shaft (3), carrying a first gear wheel (4), and a single item part or multi-part second shaft (5), arranged at an angle thereto and carrying at least one second gear wheel (6), which shafts (3,5) are mounted in a bearing block (7), at least the first shaft passing twice through the bearing block (7) and having a support zone (10) which supports the second shaft (5), characterised in that the support zone (10) directly supports the second shaft (5) passing only once through the bearing block (7) and itself serves as an axial pivot bearing for it and at the same time is formed along the axis of the first shaft (3) in such a way that it fills the space between the first gear wheel (4) and the bearing block (7) to such an extent that the first shaft (3) can still be easily rotated but is capable of resisting warping caused by tensile or compressive forces.

2. Toothed gear according to claim 1, characterised in that the shaft (3) passing through twice corresponds to a drive shaft and the supported second shaft (5) is formed by an output shaft, the support zone (10) being arranged between the driving gear wheel (4) and the bearing of the driving shaft (3) in the bearing block (7) and optionally having an increased diameter (D) measured at the drive shaft (3) outside the bearing block (7).

3. Toothed gear according to claim 1 or 2, characterised in that the support zone (10) is supported on the one hand in the region of a bearing for the continuous shaft (3) on the bearing block (7) and on the other hand on the gear wheel (4) borne by the shaft (3) passing through twice, and at the same time supports the gear wheel (6) borne by the supported second shaft (5).

4. Toothed gear according to any of the preceding claims, characterised in that the bearing block (7) is U-shaped or pan-shaped and has at least two limbs (7a,b) opposite one another, on which the shaft (3) passing through twice is mounted, the supported second shaft (5) being mounted on the connecting limb (7c), and optionally a cover (7d) or yoke which has a frictional and/or interlocking connection being provided for closing the U or the pan.

5. Toothed gear according the any of the preceding claims, characterised in that the shaft (3) passing through twice is rotatably mounted at least on one side of the bearing block (7) in a mounting tube (2) which is connected to the bearing block (7), for example screwed on to, screwed in to, pressed together with, welded with or formed as a single piece with said bearing block.

6. Toothed gear wheel according to any of the preceding claims, characterised in that the support zone (10) is formed by an optionally rotatable and/or 2-part sleeve or socket (8) which surrounds the shaft (3) passing through twice and is supported on both sides, preferably at least the lateral surface of the sleeve (8) optionally also the other parts rubbing against one another being provided with coating to impart sliding properties - in particular by means of Teflon (registered trademark of DUPONT).

7. Toothed gear according to any of the preceding claims, characterised in that the drive shaft (3) is in one piece and that the driving gear wheel(4) is fixed axially and detachably to this shaft, said shaft preferably having, on the side of the mounting tube (2) at least one socket ring (9), which likewise acts axially and can be detachably fixed, for connecting the shaft (3) to at least one shaft extension (3a,b).

8. Toothed gear according to any of the preceding claims, characterised in that the driving gear wheel (4) and/or the sleeve (8) is in the form of a coupling socket, or are each in the form of a coupling socket, and that the drive shaft (3) consists of at least two parts which can be connected to one another by at least one of the coupling sockets.

9. Toothed gear according to any of the preceding claims, characterised in that the driving gear wheel (4) is formed as a single piece together with the sleeve (8).

10. Toothed gear according to any of the preceding claims, characterised in that the driving gear wheel (4) is fixed on the drive shaft (3) in such a way that a concentric coupling zone projects into the interior of the bearing block (7) and/or that the sleeve (8) serves a coupling socket for the drive shaft consisting of two parts.

11. Toothed gear according to any of the preceding claims, characterised in that three intermeshing gear wheels which form a differential are provided.

12. Use of a toothed gear according to any of the preceding claims for an opening drive of articulated-arm awnings, windows, doors, flaps, adjusting mechanisms for gear or motor controls, etc.

## Revendications

1. Transmission à roue dentée comportant un premier arbre (3) en une ou plusieurs parties, portant une première roue dentée (4) et au moins un deuxième arbre (5) réalisé en une ou plusieurs parties, disposé selon un certain angle par rapport au premier arbre, portant une deuxième roue dentée (6), les arbres (3, 5) étant montés à rotation dans un bloc palier (7), au moins le premier arbre traversant en deux endroits le bloc palier (7) et présentant une section d'appui (10) qui soutient le deuxième arbre (5), caractérisée en ce que la section d'appui (10) soutient alors directement le deuxième arbre (5), qui ne traverse le bloc palier (7) qu'en un endroit et est sert alors lui-même de palier de rotation et axial pour l'arbre (5) et la section d'appui (10) est réalisée simultanément, le long de l'axe du premier arbre (3), de manière à remplir l'espace existant entre la première roue dentée (3) et le bloc palier (7) de manière que le premier arbre (3) puisse encore facilement tourner, en offrant cependant une résistance issue de la flexion provoquée par des efforts de traction ou de compression.

2. Transmission à roue dentée selon la revendication 1, caractérisée en ce que l'arbre (3) qui traverse en deux endroits correspond à un arbre d'entraînement et le deuxième arbre (5) soutenu est constitué par un arbre entraîné, la section d'appui (10) étant disposée entre la roue dentée motrice et le palier de tourillonnement de l'arbre d'entraînement (3) dans le bloc palier (7) et, le cas échéant présente un diamètre (D) augmenté - si l'on mesure à l'endroit de l'arbre d'entraînement (3), à l'extérieur du bloc palier (7).

3. Transmission à roue dentée selon la revendication 1 ou 2, caractérisée en ce que la section d'appui (10) est soutenue d'une part dans la zone d'un palier destiné à l'arbre traversant (3) sur le bloc palier (7) et d'autre part sur l'arbre (3) traversant aux deux endroits et soutient simultanément la roue dentée (6) portée par le deuxième arbre (5) soutenu.

4. Transmission à roue dentée selon l'une des revendications précédentes, caractérisée en ce que le bloc palier (7) est en forme de U ou en forme d'auge et présente au moins deux branches (7a,b) opposées, sur lesquelles tourillonne l'arbre (3) traversant en deux endroits, le deuxième arbre (5) soutenu étant monté à rotation sur la branche de liaison (7c) et le cas échéant un couvercle (7d), pouvant être fixé par ajustement de forme et/ou par liaison mécanique, ou une culasse étant prévue pour assurer l'obturation du U, respectivement de l'auge.

5. Transmission à roue dentée selon l'une des revendications précédentes, caractérisée en ce que l'arbre (3) traversant en deux endroits est monté à rotation au moins d'un côté du bloc palier (7) dans un tube de montage (2) qui est relié au bloc palier (7), par exemple par vissage extérieur, vissage intérieur, pressage, soudage ou par réalisation d'un seul tenant.

6. Transmission à roue dentée selon l'une des revendications précédentes, caractérisée en ce que la section d'appui (10) est constituée par une douille ou un manchon (8) entourant l'arbre (3) traversant en deux endroits, soutenu des deux côtés - le cas échéant avec possibilité de rotation et/ou de division en deux - au moins la surface d'enveloppe de la douille (8), le cas échéant également le reste des parties frottant les unes sur les autres étant recouvertes de préférence en permettant un glissement - en particulier au moyen de Téflon (dénomination commerciale de la Société DU PONT).

7. Transmission à roue dentée selon l'une des revendications précédentes, caractérisée en ce que l'arbre d'entraînement (3) est monopièce et en ce que la roue dentée (4) motrice est fixée axialement d'une façon démontable sur cet arbre, en présentant de préférence sur le côté des tubes de montage (2) au moins un anneau de manchon (9) agissant également axialement, pouvant être fixé de façon désolidarisable, pour assurer la liaison de l'arbre (3) a au moins un prolongement d'arbre (3a,b).

8. Transmission à roue dentée selon l'une des revendications précédentes, caractérisée en ce que la roue dentée (4) motrice et/ou la douille (8) est, respectivement sont réalisées chacune sous forme de manchons d'accouplement, et en ce que l'arbre d'entraînement (3) est constitué d'au moins deux parties pouvant être reliées ensemble à l'aide d'au moins l'un des manchons d'accouplement.

9. Transmission à roue dentée selon l'une des revendications précédentes, caractérisée en ce que la roue dentée (4) motrice est réalisée d'une seule pièce conjointement avec la douille (8).

10. Transmission à roue dentée selon l'une des revendications précédentes, caractérisée en ce que la roue dentée (4) motrice est fixée sur l'arbre d'entraînement (3) de manière à ce qu'une section d'accouplement concentrique pénètre dans l'espace intérieur du bloc palier (7) et/ou que la douille (8) serve de manchon d'accouplement pour l'arbre d'entraînement constitué de deux parties.

11. Transmission à roue dentée selon l'une des revendications précédentes, caractérisée en ce que sont prévues deux roues dentées s'engrenant et constituant un différentiel.

12. Utilisation d'une transmission à roue dentée selon l'une des revendications précédentes pour un entraînement d'ouverture de bannes à bras articulés, fenêtres, portes, mécanismes de réglage destinés à des commandes de boîte de vitesses ou de moteur, ou autres.
